(19) Europäisches Patentamt
European Patent Office
Office européen des brevets

(11) **EP 4 174 722 A1**

(12) **EUROPEAN PATENT APPLICATION**

(43) Date of publication:
**03.05.2023 Bulletin 2023/18**

(21) Application number: **22203495.1**

(22) Date of filing: **25.10.2022**

(51) International Patent Classification (IPC):
**G06N 3/0455** (2023.01)     **G06N 3/047** (2023.01)
**G06N 3/0475** (2023.01)     **G06N 3/094** (2023.01)

(52) Cooperative Patent Classification (CPC):
**G06N 3/0455; G06N 3/047; G06N 3/0475;
G06N 3/094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2021 KR 20210144793**

(71) Applicants:
• **Samsung SDS Co., Ltd.
Songpa-gu, Seoul (KR)**
• **Industry-Academic Cooperation Foundation
Yonsei University
Seoul (KR)**

(72) Inventors:
• **KIM, Minjung
Seoul (KR)**

• **LEE, Youngseon
Seoul (KR)**
• **YOON, Hyojin
Seoul (KR)**
• **CHO, Jihoon
Seoul (KR)**
• **KIM, Younghyun
Seoul (KR)**
• **PARK, Noseong
Seoul (KR)**
• **HYEONG, Jihyeon
Seoul (KR)**
• **LEE, Jaehoon
Tongyeong-si (KR)**

(74) Representative: **Glawe, Delfs, Moll
Partnerschaft mbB von
Patent- und Rechtsanwälten
Postfach 13 03 91
20103 Hamburg (DE)**

(54) **METHOD AND APPARATUS FOR GENERATING SYNTHETIC DATA**

(57)     Disclosed is a method and apparatus for generating synthetic data. A generative adversarial network (GAN)-based synthetic data generating apparatus according to an embodiment may include a generating unit configured to receive an original data embedding vector and to generate a fake data embedding vector by using an invertible neural network, and a discriminating unit configured to receive the original data embedding vector and the fake data embedding vector and to discriminate whether the original data embedding vector and the fake data embedding vector are fake data.

FIG. 2

**Description**

BACKGROUND OF THE INVENTION

1. Field of the invention

Embodiments disclosed relate to a synthetic data generating technique.

2. Description of the Prior Art

Research on a generative adversarial network has been conducted as a scheme of generating synthetic data. The generative adversarial network shows high performance in a consecutive type of data such as image data. However, it is difficult to utilize the generative adversarial network in data in a form that combines a consecutive type of data and a category type of data.

Conditional tabular GAN (CTGAN) is one of the models developed to process unique characteristics of table data by using pre-processing used in conventional statistical schemes. However, a pre-processing process of this model may be affected by capability of an analyzer. Therefore, in the case that the pre-processing process has an error, the characteristics of the original data may be distortedly learned when synthetic data generating model training is performed.

PRIOR ART DOCUMENTS

PATENT DOCUMENT

(Patent Document 1) U.S. patent No. US 9,672,364 (registered on June 6, 2017).

SUMMARY OF THE INVENTION

Embodiments disclosed are to provide a method and apparatus for generating synthetic data.

A generative adversarial network-based synthetic data generating apparatus according to an embodiment may include a generating unit configured to receive an original data embedding vector and to generate a fake data embedding vector by using an invertible neural network, and a discriminating unit configured to receive the original data embedding vector and the fake data embedding vector and to discriminate whether the original data embedding vector and the fake data embedding vector are fake data.

The invertible neural network may include a first artificial neural network to generate an original data latent vector from the original data embedding vector, and a second artificial neural network to generate an estimated data embedding vector from the original data latent vector, wherein the first artificial neural network and the second artificial neural network are in an inverse function relation.

The second artificial neural network may receive an input latent vector having a normal distribution and may generate a fake data embedding vector.

The invertible neural network may derive a likelihood that is a probability distribution of the original data embedding vector for generating the estimated data embedding vector from the original data embedding vector.

The invertible neural network may be trained based on a loss function including a regulation term including the likelihood.

The regulation term may have a regulation parameter as a scale factor, and when the regulation parameter is increased in a positive direction, similarity to original data is increased and a degree of privacy is decreased, and when the regulation parameter is increased in a negative direction, the similarity to the original data is decreased and the degree of privacy is increased.

The synthetic data generating apparatus may further include an encoding unit configured to receive original data and to generate the original data embedding vector by converting the original data into data in a lower dimension, and a decoding unit that is trained to reconstruct data in a same dimension as the original data from the original data embedding vector received from the encoding unit.

The decoding unit may include a third artificial neural network that is trained to reconstruct data similar to the original data from the original data embedding vector.

The decoding unit may receive the fake data embedding vector from the generating unit and may generate fake data by using the third artificial neural network.

A generative adversarial network-based synthetic data generating method according to an embodiment may include a generation operation that receives an original data embedding vector and generates a fake data embedding vector by using an invertible neural network, and a discrimination operation that receives the original data embedding vector and the fake data embedding vector and discriminates whether the original data embedding vector and the fake data embedding vector are fake data.

The invertible neural network may include a first artificial neural network to generate an original data latent vector from the original data embedding vector, and a second artificial neural network to generate an estimated data embedding vector from the original data latent vector, wherein the first artificial neural network and the second artificial neural network are in an inverse function relationship.

The second artificial neural network may receive an input latent vector having a normal distribution and may generate a fake data embedding vector.

The invertible neural network may derive a likelihood that is a probability distribution of the original data embedding vector for generating the estimated data embedding vector from the original data embedding vector.

The invertible neural network may be trained based on a loss function including a regulation term including the likelihood.

The regulation term may have a regulation parameter as a scale factor, and when the regulation parameter is increased in a positive direction, similarity to original data is increased and a degree of privacy is decreased, and when the regulation parameter is increased in a negative direction, the similarity to the original data is decreased and the degree of privacy is increased.

The synthetic data generating method may further include an encoding operation that receives original data and generates the original data embedding vector by converting the original data into data in a lower dimension, and a decoding operation that reconstructs data in a same dimension as the original data from the original data embedding vector.

The decoding operation may use a third artificial neural network that is trained to reconstruct data similar to the original data from the original data embedding vector.

The decoding operation may receive the fake data embedding vector from the generation operation and may generate fake data by using the third artificial neural network.

According to embodiment disclosed, there is provided a synthetic data generating apparatus and method that can control synthetic data performance and a privacy level.

## BRIEF DESCRIPTION OF THE DRAWINGS

The above and other aspects, features, and advantages of the present disclosure will be more apparent from the following detailed description taken in conjunction with the accompanying drawings, in which:

FIG. 1 is a block diagram illustrating a synthetic data generating apparatus according to an embodiment;
FIG. 2 is a block diagram illustrating a synthetic data generating apparatus according to an embodiment;
FIG. 3 is a flowchart illustrating a synthetic data generating method according to an embodiment; and
FIG. 4 is a block diagram illustrating an example of a computing environment including a computing device according to an embodiment.

## DETAILED DESCRIPTION OF THE EXEMPLARY EMBODIMENTS

Hereinafter, detailed embodiments of the disclosure will be described with reference to drawings. A detailed description below will be provided to help comprehensive understanding of the method, device, and/or system described in the present specification. However, this is merely an example, and the present disclosure is not limited thereto.

When describing embodiments of the present disclosure, if it is determined that the detailed descriptions of a well-known art related to the present disclosure make the subject matter of the present disclosure unclear, the detailed descriptions thereof will be omitted herein. The terms to be described below are terms defined in consideration of functions in the present disclosure, and may be changed by a user, the intention of an operator, practice, or the like. Therefore, the definitions of the terms should be made based on the contents throughout the specification. The terms used in the detailed description is for the purpose of describing embodiments of the present disclosure only and is not intended to be restrictive. The singular forms are intended to include the plural forms as well, unless the context clearly indicates otherwise. In the descriptions, the terms "comprises," or "includes," specify features, numbers, steps, operations, elements, and/or part or a combination thereof, but should not be construed to exclude the presence or possibility of one or more other features, numbers, steps, operations, elements, and/or part or combination thereof.

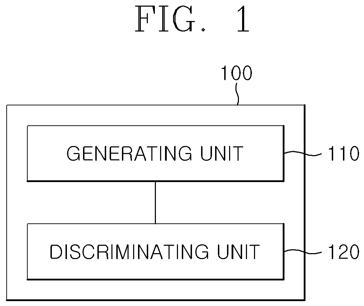

FIG. 1 is a block diagram illustrating a synthetic data generating apparatus according to an embodiment.

According to an embodiment, a generative adversarial network (GAN)-based synthetic data generating apparatus 100 may include a generating unit 110 that receives an original data embedding vector and generates a fake data embedding vector by using an invertible neural network, and a discriminating unit 120 that receives the original data embedding vector and the fake data embedding vector and discriminates whether the original data embedding vector and the fake data embedding vector are fake data.

According to an embodiment, the generative adversarial network (GAN) is a generation model including a generator to generate fake data and a discriminator to discriminate original data and fake data. The generative adversarial network performs training in a manner in which the generator and the discriminator are in contention, and aims to generate fake data similar to the original data. For example, every time that the discriminator is aware of data generated by the generator is fake, the generator may receive negative feedback and may improve the quality of fake data by using the same. In addition, the discriminator may be trained to better discriminate fake data based on a result obtained by discriminating the original data and fake data.

For example, the generative adversarial network does not consider the distribution of original data as an explicit training goal and only performs adversarial training. Therefore, there may be a difference in distribution between fake data and the original data and thus, the usefulness of the fake data may be lowered. Specifically, a mode collapse that is the chronic problem of generative adversarial network may equally occur in table data.

According to an embodiment, in order to overcome the uppermost limit of the existing generative adversarial network, the generator of the generative adversarial network may be configured as an invertible neural network (INN) .

The invertible neural network may be a neural network that is capable of inferring an input-output relationship bidirectionally. For example, in the case that the generator is expressed as x=G(z) that receives a latent vector z as an input and generates data record x, the calculation of $z=G^{-1}(x)$, which is performed in inverse direction, is available. In this process, Pr(x|z) that is the probability that generator G will generate x from z may be calculated as a byproduct. In this instance, the probability is referred to as likelihood.

According to an embodiment, the invertible neural network may include a first artificial neural network that generates an original data latent vector from the original data embedding vector and a second artificial neural network that generates an estimated data embedding vector from the original data latent vector.

According to an embodiment, the invertible neural network may be configured based on a neural ordinary differential equation (ODE) based on a differential equation.

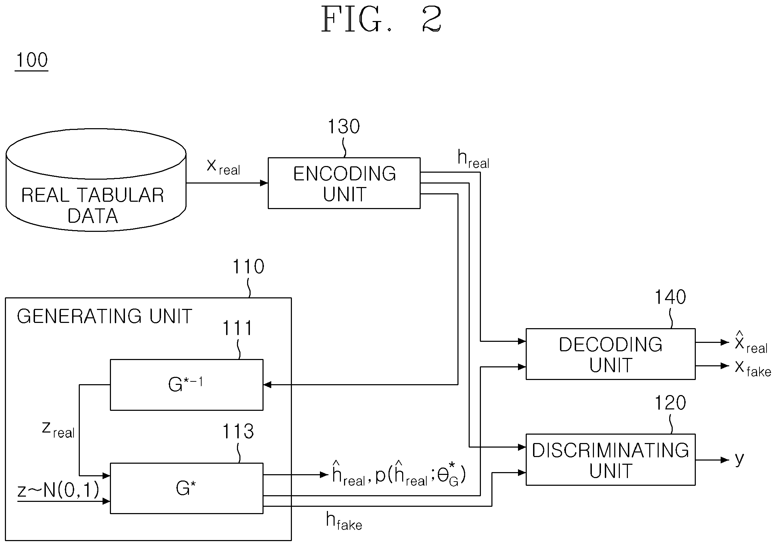

Referring to FIG. 2, the generating unit 110 may include a first artificial neural network $((G^*)^{-1})$ 111 and a second artificial neural network $(G^*)$ 113 that is configured as an inverse function of the first artificial neural network. For example, the first artificial neural network 111 may receive an embedding vector $h_{real}$ of original data $x_{real}$, and may generate a latent vector $z_{real}$. In addition, the second artificial neural network 113 may receive the latent vector $z_{real}$ generated by the first artificial neural network 111 and may obtain the estimated value $\hat{h}_{real}$ of the original data embedding vector $h_{real}$ and a byproduct $p(\hat{h}_{real}; \theta_G^*)$ . In this instance, the likelihood $p(\hat{h}_{real}; \theta_G^*)$ may be added to a loss function of a generative adversarial network as a regularization term, and using the same, may control fake data performance and a privacy level.

According to an embodiment, the second artificial neural network 113 may receive an input latent vector having a normal distribution and may generate a fake data embedding vector.

For example, the second artificial neural network 113 may receive a latent vector z having a normal distribution and may generate an embedding vector $h_{fake}$ of fake data. Subsequently, the discriminating unit 120 may receive the embedding vector $h_{fake}$ of the fake data and the embedding vector $h_{real}$ of the original data, and may determine (y) whether the original data embedding vector and the fake data embedding vector are genuine or fake. In this instance, every time that the discriminating unit 120 determines data generated by the second artificial neural network 113 is fake, the second artificial neural network 113 may receive negative feedback and may update performance.

For example, the process that the second artificial neural network 113 and the discriminating unit 120 perform adversarial training may utilize a training method used by a normal generative adversarial network (GAN).

According to an embodiment, an invertible neural network may derive a likelihood that is the probability distribution of an original data embedding vector for generating an estimated data embedding vector from the original data embedding vector.

According to an embodiment, in the case that an artificial neural network (G*) that receives a latent vector z as an input and generates data h is defined as an invertible neural network, this is expressed as h=G*(z), and this means that the calculation of $z=(G^*)^{-1}(h)$ is available. In this instance, $p(h;\theta_{(G^*)})$ that is the probability that generator G* will generate h as a byproduct may be obtained. In this instance, in the case that the embedding vector h is regarded as a random variable, $p(\cdot;\theta_{(G^*)})$ that is a function associated with h is the probability distribution of h, which is referred to as a likelihood.

According to an embodiment, $G^*: R^{\dim(z)} \to R^{\dim(h)}$ may be defined as follows.

[Equation 1]

$$h_{fake} = z(0) + \int_0^1 f(z(t), t; \theta_{G^*}) dt$$

$$f(z(t), t; \theta_{G^*}) = f'(z(t), t; \theta_{G^*}) - z(t)$$

$$f'(z(t), t; \theta_{G^*}) = F_k(\cdots \sigma(F_1(z,t)) \cdots)$$

$$F_k(z,t) = \left(1 - M_i(z,t)\right) FC_{(i,1)}(z) + M_i(z,t) FC_{(i,2)}(z)$$

Here, index K of F denotes a constant that is determined in advance by a model designer, FC denotes a fully connected layer, and $\sigma$ denotes an activation function. The third line of Equation 1 is a differential equation defined as a neural ODE, and the complexity of a model may be reduced by using a function defined in the form of a differential equation. In addition, a model selecting matter that needs to determine how many layers are to be layered at the same time may be solved. As shown in the last equation of Equation 1, by defining an artificial neural network, which defines a differential equation, in the form of an ensemble that automatically determines weight ($M_i(z,t)$) according the characteristic of data and over time, an excessive bundle used when model training is performed may be distributed and shared by a plurality of artificial neural networks.

For example, $p(\cdot; \theta_{(G^*)})$ that is the probability distribution of h may be derived from the distribution of z based on G* defined as an invertible neural network, that is, derived from standard Gaussian distribution N (0,1), using variable conversion theory.

[Equation 2]

$$\log p(h) = \log p(z) - \int_0^1 Tr\left(\frac{\partial f}{\partial z(t)}\right) dt, \text{ where } h \equiv z(1), z \equiv z(0)$$

For example, Equation 2 expresses a method of deriving the distribution of h from the distribution of z. Specifically, the probability distribution of h may be derived after $Tr(\partial f / \partial z(t))$ associated with f is obtained as shown in Equation 2.

According to an embodiment, the invertible neural network may be trained based on a loss function including a regulation term including a likelihood.

For example, the loss function may be expressed as shown in Equation 3 below.

[Equation 3]

$$L_{GAN}(\theta_D, \theta_{G^*}) + \gamma \, E[-\log p(x; \theta_{G^*})]_{x \sim p_{data}}$$

Here, $L_{GAN}(\theta_D, \theta_{G^*})$ is a loss function associated with adversarial training of a generative adversarial network (GAN), and $E[-\log p(x; \theta_{G^*})]_{x \sim p_{data}}$ is a loss function associated with likelihood-based training of an invertible neural network (INN). Accordingly, Equation 1 expresses a loss function associated with combining two training methods, and consequently, may include all the advantages of the GAN and the INN and may improve the quality of synthetic data.

According to an embodiment, the regulation term may have a regulation parameter as a scale factor.

According to an embodiment, in the case that a regulation parameter is increased in a positive direction, similarity to original data is increased and the degree of privacy is decreased, and in the case that a regulation parameter is increased in a negative direction, the similarity to the original data is decreased and the degree of privacy is increased.

For example, training to increase a likelihood in Equation 3 refers to training in a direction of increasing the probability by which the generating unit 110 will generate original data $x_{real}$. Conversely, training to decrease a likelihood refers to training in a direction of decreasing the probability by which the generating unit 110 will generate the original data, so as to decrease the risk of leaking sensitive information that synthetic data may have. Accordingly, as shown in Equation 3, a likelihood term may include a regulation parameter $\gamma$. For example, in the case that $\gamma$ is a positive number, the generating unit 110 may be trained to increase the probability of generating a genuine sample, and thus, may generate fake data similar to the original data. Conversely, in the case that $\gamma$ is a negative number, the generating unit 110 may be trained to decrease the probability of generating the original data but to generate a high quality of fake data that may be determined as genuine data by the discriminating unit 120.

According to an embodiment, an auto encoder may be a type of artificial neural network used for efficiently training coding of data of which label is not designated. The auto encoder may be configured with an encoder and a decoder, and may be used for a dimension reduction matter. For example, the encoder may receive a higher-dimension input and may change the same into a lower-dimension internal representation (embedding vector), and the decoder may change the lower-dimension internal representation into a higher-dimension output again. The auto encoder may change an input into an embedding vector and may perform reconstruction of an output again. Accordingly, a cost function of the auto encoder may be learned using a reconstruction loss function (reconstruction error) that imposes a penalty point when the reconfiguration (i.e., output) is different from the input.

According to an embodiment, the synthetic data generating apparatus 100 may further include the encoding unit 130 that receives original data, and generates an original data embedding vector by converting the original data into lower-dimension data.

For example, in the case that a consecutive type of variable and a category type of variable are mixedly present, the generating unit 110 may not immediately use an invertible neural network. As an example to overcome the problem, in the case that the encoding unit 130 embeds a category type of variable and a consecutive type of variable together as a consecutive type of variable, the generating unit 110 may use the invertible neural network.

According to an embodiment, the synthetic data generating apparatus 100 may further include a decoding unit 140 that is trained to reconstruct data similar to original data from the original data embedding vector received from the encoding unit 130.

For example, the encoding unit 130 may generate a lower-dimension embedding vector $h_{real}$ from original data $x_{real}$. In addition, the decoding unit 140 may decode the embedding vector $h_{real}$ into higher-dimension data $\hat{x}_{real}$ again.

According to an embodiment, the decoding unit 140 may include a third artificial neural network that is trained to reconstruct data similar to original data from an original data embedding vector. For example, the third artificial neural network may be trained to generate reconstructed output $\hat{x}_{real}$ to be similar to $x_{real}$.

According to an embodiment, the decoding unit may receive the fake data embedding vector from the generating unit and may generate fake data by using the third artificial neural network. For example, the decoding unit 140 may decode the fake data embedding vector $h_{fake}$ (lower dimension) by utilizing the trained third artificial neural network, and may generate fake data $x_{fake}$ (in the same dimension as that of $x_{real}$) that is synthetic data.

According to an embodiment, the decoding unit 140 may receive a fake data embedding vector from the generating unit 110 and may generate fake data by using the third artificial neural network. As illustrated in FIG. 2, the decoding unit 140 may receive a fake data embedding vector $h_{fake}$ from the generating unit 110, and may generate fake data $x_{fake}$ from $h_{fake}$ by using the third artificial neural network that is trained to reconstruct original data by using an original data embedding vector.

According to an embodiment, in the case that the encoding unit 130 and the decoding unit 140 are added, a loss function may be defined as shown in Equation 4 below.

[Equation 4]

$$\min_{\theta_G,\theta_{AE}} \max_{\theta_D} \left[ L_{GAN}(\theta_D,\theta_{G^*}) + \gamma\, E[-\log p\,(h;\theta_{G^*})]_{h\sim p_{data(AE)}} + L_{AE}(\theta_{AE}) \right]$$

Here, in the synthetic data generating apparatus according to an embodiment, an original data embedding vector h, instead of original data x, is applied as input data, and thus,

$$\gamma\, E[-\log p\,(x;\theta_{G^*})]_{x\sim p_{data}}$$

in above-described Equation 3 may be changed to

$$\gamma\, E[-\log p\,(h;\theta_{G^*})]_{h\sim p_{data(AE)}}.$$

In addition, D denotes a discriminator of a generative adversarial network, and G* denotes a generator that is designed using an invertible neural network. $L_{GAN}(\theta_D, \theta_{(G*)})$ denotes a loss function of the generative adversarial network, and may be defined as one of the various types of loss functions (e.g., WGAN loss, WGAN-GP loss, or the like) including a general generative adversarial network loss function as given in Equation 5.

[Equation 5]

$$L_{GAN}(\theta_D, \theta_{G*}) = E[\log D_{\theta_D}(x)]_{x \sim p_{data}} + E\left[\log\left(1 - D_{\theta_D}\left(G_{\theta_{G*}}(z)\right)\right)\right]_{z \sim p_z}$$

In addition, $p_z$ denotes the distribution of a latent vector, and $p_{data}$ denotes the distribution of original data. $L_{AE}(\theta_{AE})$ denotes a loss function associated with an encoding unit and a decoding unit, and may be expressed as given in Equation 6.

[Equation 6]

$$L_{AE}(\theta_{AE}) \equiv L_{reconstruct} + \frac{1}{2}\left\|h_{real}\right\|^2 + \left\|h_{fake} - \hat{h}_{fake}\right\|^2$$

Specifically, the loss associated with the encoding unit and the decoding unit may be provided in the form of the sum of a reconstruction loss used for auto encoder training, L2 regularization for dimension reduction performed in the encoding unit, and the distance between a fake data embedding vector $h_{fake}$ estimated based on a latent vector z and an embedding vector $\hat{h}_{fake}$ reconstructed by the decoding unit. Here, $\hat{h}_{fake}$ is a result obtained in a manner in which the decoding unit decodes $h_{fake}$ (i.e., $x_{fake}$) and the encoding unit encodes the same again. In the case of an existing reconfiguration loss, the encoding unit and the decoding unit may be trained to operate so that $\hat{x}_{real}$ becomes similar to $x_{real}$ within the range of original data. However, $h_{fake}$ generated in the generating unit may also affect training of the encoding unit and the decoding unit and thus, $L_{AE}(\theta_{AE})$ may derive a reliable result even in association with fake data.

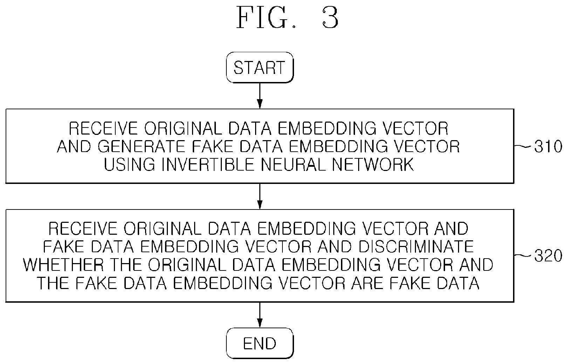

FIG. 3 is a flowchart illustrating a synthetic data generating method according to an embodiment.

According to an embodiment, a generative adversarial network-based synthetic data generating method may include a generation operation 310 that receives an original data embedding vector, and generates a fake data embedding vector by using an invertible neural network.

According to an embodiment, in order to overcome the uppermost limit of an existing generative adversarial network, a generator of the generative adversarial network may be configured as an invertible neural network (INN).

According to an embodiment, the invertible neural network may include a first artificial neural network that generates an original data latent vector from an original data embedding vector, and a second artificial neural network that generates an estimated data embedding vector from the original data latent vector.

For example, the first artificial neural network may receive an embedding vector $h_{real}$ of original data $x_{real}$ and may generate a latent vector $z_{real}$. In addition, the second artificial neural network may receive the latent vector $z_{real}$ generated by the first artificial neural network and may obtain $\hat{h}_{real}$ that is the estimated value of the original data embedding vector $h_{real}$ and $p(\hat{h}_{real}; \theta_{G*})$ that is a byproduct.

According to an embodiment, the synthetic data generating method may include a discrimination operation 320 that receives the original data embedding vector and the fake data embedding vector, and discriminates whether the original data embedding vector and the fake data embedding vector are fake data.

For example, the second artificial neural network may receive a latent vector z having a normal distribution and may generate an embedding vector $h_{fake}$ of the fake data. Subsequently, the discrimination operation may receive the embedding vector $h_{fake}$ of the fake data and the embedding vector $h_{real}$ of the original data, and may determine whether the original data embedding vector and the fake data embedding vector are genuine or fake. In this instance, every time that the discrimination operation determines that data generated by the second artificial neural network is fake, the second artificial neural network may receive negative feedback and may update performance.

According to an embodiment, the invertible neural network may derive a likelihood that is the probability distribution of the original data embedding vector for generating the estimated data embedding vector from the original data embedding vector.

According to an embodiment, the invertible neural network may perform training based on a loss function including a regulation term including a likelihood. In this instance, the regulation term may have a regulation parameter as a scale factor. For example, in the case that the regulation parameter is increased in a positive direction, similarity to the original data is increased and the degree of privacy is decreased, and in the case that the regulation parameter is increased in a negative direction, the similarity to the original data is decreased and the degree of privacy is increased.

According to an embodiment, the synthetic data generating method may further include an encoding operation that receives the original data and generates the original data embedding vector by converting the input original data into lower-dimension data, and a decoding operation that reconstructs data in the same dimension as the original data from the original data embedding vector.

For example, the encoding operation may generate a lower-dimension embedding vector $h_{real}$ from the original data $x_{real}$. In addition, the decoding operation may decode the embedding vector $h_{real}$ into higher-dimension data $\hat{x}_{real}$ again.

According to an embodiment, the decoding operation may use a third artificial neural network that is trained to reconstruct data similar to the original data from the original data embedding vector. For example, the third artificial neural network may be trained to generate a reconstructed output $\hat{x}_{real}$ to be similar to $x_{real}$.

According to an embodiment, the decoding operation may receive the fake data embedding vector from the generation operation and may generate fake data by using the third artificial neural network.

For example, the decoding operation may decode the fake data embedding vector $h_{fake}$ (lower dimension) by utilizing the trained third artificial neural network, and may generate fake data $x_{fake}$ (in the same dimension as that of $x_{real}$) that is synthetic data.

In the descriptions provided with reference to FIG.3, the parts overlap the parts which have been described with reference to FIGS. 1 and 2 are omitted.

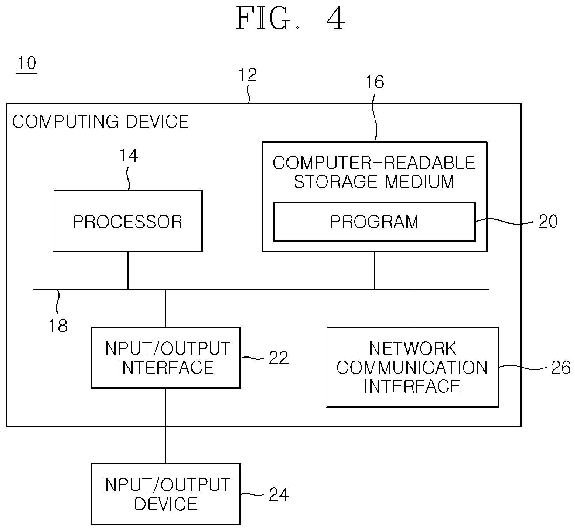

FIG. 4 is a block diagram illustrating an example of a computing environment including a computing device according to an embodiment. In the illustrated embodiments, the respective components may have different functions and capabilities, in addition to the description below, and an additional component that is not described below may be included.

The illustrated computing environment 10 includes a computing device 12. According to an embodiment, the computing device 12 may be one or more components included in the synthetic data generating apparatus 100. The computing device 12 may include at least one processor 14, a computer-readable storage medium 16, and a communication bus 18. The processor 14 may enable the computing device 12 to operate according to the above-described embodiments. For example, the processor 14 may implement one or more programs stored in the computer-readable storage medium 16. The one or more programs may include one or more computer-executable instructions, and the computer-executable instructions may be configured to enable the computing device 12 to perform operations according to embodiments when the computer-executable instructions are executed by the processor 14.

The computer-readable storage medium 16 may be configured to store a computer-executable instruction or program code, program data, and/or other appropriate types of information. The program 20 stored in the computer-readable storage medium 16 may include a set of instructions executable by the processor 14. According to an embodiment, the computer-readable storage medium 16 may be memory (volatile memory such as a random access memory, non-volatile memory, or an appropriate combination thereof), one or more magnetic disc storage devices, optical disc storage devices, flash memory devices, and other types of storage media capable of storing information desired or accessed by the computing device 12, or an appropriate combination thereof.

The communication bus 18 may include the processor 14, the computer-readable storage medium 16, and may mutually connect to various other components of the computing device 12.

The computing device 12 may include one or more input/output interfaces 22 that provides an interface for one or more input/output devices 24, and one or more network communication interfaces 26. The input/output interface 22 and the network communication interface 26 may be connected to the communication bus 18. The input/output device 24 may be connected to other components of the computing device 12 via the input/output interface 22. The illustrated input/output device 24 may include a pointing device (a mouse, a trackpad, or the like), a keyboard, a touch input device (a touch pad, a touch screen, or the like), a voice or sound input device, various types of sensor devices, and/or an input device such as a shooting device, and/or an output device such as a display device, a printer, a speaker, and/or a network card. The illustrated input/output device 24 may be included in the computing device 12 as one of the components that constitute the computing device 12, or may be connected to the computing device 12 as a separate device from the computing device 12.

Although the present disclosure has been described in detail with reference to a representative embodiment, it would be apparent to those skilled in the art that various modifications can be made to the above-described embodiments without departing from the scope of the present disclosure. Therefore, the scope of the present disclosure cannot be determined merely based on the described embodiments. Rather, the scope of the present disclosure should be determined based on the accompanying claims and their equivalents.

Description of reference numerals

10: computing environment
12: computing device
14: processor
16: computer-readable storage medium
18: communication bus
20: program
22: input/output interface
24: input/output device
26: network communication interface
100: synthetic data generating apparatus
110: generating unit
120: discriminating unit
130: encoding unit
140: decoding unit

**Claims**

1. A generative adversarial network-based synthetic data generating apparatus, the apparatus comprising:

   a generating unit configured to receive an original data embedding vector and to generate a fake data embedding vector by using an invertible neural network; and
   a discriminating unit configured to receive the original data embedding vector and the fake data embedding vector and to discriminate whether the original data embedding vector and the fake data embedding vector are fake data.

2. The apparatus of claim 1, wherein the invertible neural network comprises:

   a first artificial neural network configured to generate an original data latent vector from the original data embedding vector; and
   a second artificial neural network configured to generate an estimated data embedding vector from the original data latent vector,
   wherein the first artificial neural network and the second artificial neural network are in an inverse function relationship.

3. The apparatus of claim 2, wherein the second artificial neural network is configured to receive an input latent vector having a normal distribution and to generate a fake data embedding vector.

4. The apparatus of claim 2, wherein the invertible neural network is configured to derive a likelihood that is a probability distribution of the original data embedding vector for generating the estimated data embedding vector from the original data embedding vector.

5. The apparatus of claim 4, wherein the invertible neural network is configured to be trained based on a loss function including a regulation term including the likelihood.

6. The apparatus of claim 5, wherein:

   the regulation term has a regulation parameter as a scale factor,
   when the regulation parameter is increased in a positive direction, similarity to original data is increased and a degree of privacy is decreased, and
   when the regulation parameter is increased in a negative direction, the similarity to the original data is decreased and the degree of privacy is increased.

7. The apparatus of claim 1, further comprising:

   an encoding unit configured to receive original data and to generate the original data embedding vector by converting the original data into data in a lower dimension; and
a decoding unit trained to reconstruct data in a same dimension as the original data from the original data embedding vector received from the encoding unit.

8. The apparatus of claim 7, wherein the decoding unit comprises a third artificial neural network trained to reconstruct data similar to the original data from the original data embedding vector.

9. The apparatus of claim 8, wherein the decoding unit is configured to receive the fake data embedding vector from the generating unit and to generate fake data by using the third artificial neural network.

10. A generative adversarial network-based synthetic data generating method, the method comprising:

a generation operation of receiving an original data embedding vector and generating a fake data embedding vector by using an invertible neural network; and
a discrimination operation of receiving the original data embedding vector and the fake data embedding vector and discriminating whether the original data embedding vector and the fake data embedding vector are fake data.

11. The method of claim 10, wherein the invertible neural network comprises:

a first artificial neural network configured to generate an original data latent vector from the original data embedding vector; and
a second artificial neural network configured to generate an estimated data embedding vector from the original data latent vector,
wherein the first artificial neural network and the second artificial neural network are in an inverse function relationship.

12. The method of claim 11, wherein the second artificial neural network is configured to receive an input latent vector having a normal distribution and to generate a fake data embedding vector.

13. The method of claim 11, wherein the invertible neural network is configured to derive a likelihood that is a probability distribution of the original data embedding vector for generating the estimated data embedding vector from the original data embedding vector.

14. The method of claim 13, wherein the invertible neural network is configured to be trained based on a loss function including a regulation term including the likelihood.

15. The method of claim 14, wherein:

the regulation term has a regulation parameter as a scale factor,
when the regulation parameter is increased in a positive direction, similarity to original data is increased and a degree of privacy is decreased, and
when the regulation parameter is increased in a negative direction, the similarity to the original data is decreased and the degree of privacy is increased.

FIG. 1

# FIG. 2

EP 4 174 722 A1

# FIG. 3

START

RECEIVE ORIGINAL DATA EMBEDDING VECTOR
AND GENERATE FAKE DATA EMBEDDING VECTOR
USING INVERTIBLE NEURAL NETWORK ~310

RECEIVE ORIGINAL DATA EMBEDDING VECTOR AND
FAKE DATA EMBEDDING VECTOR AND DISCRIMINATE
WHETHER THE ORIGINAL DATA EMBEDDING VECTOR AND
THE FAKE DATA EMBEDDING VECTOR ARE FAKE DATA ~320

END

# FIG. 4

<u>10</u>

COMPUTING DEVICE

PROCESSOR

COMPUTER-READABLE
STORAGE MEDIUM

PROGRAM

INPUT/OUTPUT
INTERFACE

NETWORK
COMMUNICATION
INTERFACE

INPUT/OUTPUT
DEVICE

Europäisches
Patentamt

European
Patent Office

Office européen
des brevets

# EUROPEAN SEARCH REPORT

Application Number

EP 22 20 3495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lee Jaehoon ET AL: "Invertible Tabular GANs: Killing Two Birds with One Stone for Tabular Data Synthesis", , 29 September 2021 (2021-09-29), pages 1-11, XP093022493, Retrieved from the Internet: URL:https://openreview.net/pdf?id=tvDBe6K8L5o [retrieved on 2023-02-09] * the whole document * ----- | 1-15 | INV. G06N3/0455 G06N3/047 G06N3/0475 G06N3/094 |
| X | LUO JUNYU ET AL: "Learning Inverse Mapping by AutoEncoder Based Generative Adversarial Nets", 26 October 2017 (2017-10-26), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 207 - 216, XP047453734, ISBN: 978-3-540-74549-5 [retrieved on 2017-10-26] * the whole document * ----- | 1-15 | |
| A | ADITYA GROVER ET AL: "Flow-GAN: Combining Maximum Likelihood and Adversarial Learning in Generative Models", ARXIV.ORG, CORNELL UNIVERSITY LIBRARY, 201 OLIN LIBRARY CORNELL UNIVERSITY ITHACA, NY 14853, 24 May 2017 (2017-05-24), XP081405378, * the whole document * ----- -/-- | 1-15 | |

TECHNICAL FIELDS SEARCHED (IPC)

G06N

The present search report has been drawn up for all claims

| Place of search | Date of completion of the search | Examiner |
|---|---|---|
| The Hague | 15 February 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 22 20 3495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Yoon Jinsung ET AL: "Time-series Generative Adversarial Networks", , 1 January 2019 (2019-01-01), XP055821728, Retrieved from the Internet: URL:https://papers.nips.cc/paper/2019/file/c9efe5f26cd17ba6216bbe2a7d26d490-Paper.pdf [retrieved on 2021-07-06] * the whole document * | 1-15 | |
| A | JIAPENG ZHU ET AL: "LIA: Latently Invertible Autoencoder with Adversarial Learning", ARXIV.ORG, CORNELL UNIVERSITY LIBRARY, 201 OLIN LIBRARY CORNELL UNIVERSITY ITHACA, NY 14853, 19 June 2019 (2019-06-19), XP081378005, * the whole document * | 1-15 | |
| A | LEI XU ET AL: "Modeling Tabular data using Conditional GAN", ARXIV.ORG, CORNELL UNIVERSITY LIBRARY, 201 OLIN LIBRARY CORNELL UNIVERSITY ITHACA, NY 14853, 1 July 2019 (2019-07-01), XP081510637, * the whole document * | 1-15 | TECHNICAL FIELDS SEARCHED (IPC) |
| A | VADIM BORISOV ET AL: "Deep Neural Networks and Tabular Data: A Survey", ARXIV.ORG, CORNELL UNIVERSITY LIBRARY, 201 OLIN LIBRARY CORNELL UNIVERSITY ITHACA, NY 14853, 5 October 2021 (2021-10-05), XP091073700, * the whole document * | 1-15 | |

The present search report has been drawn up for all claims

| Place of search | Date of completion of the search | Examiner |
|---|---|---|
| The Hague | 15 February 2023 | Moro Pérez, Gonzalo |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9672364 B